# EUROPÄISCHE PATENTSCHRIFT

(11) **EP 2 605 374 B1**
(45) Veröffentlichungstag und Bekanntmachung des Hinweises auf die Patenterteilung: **18.03.2020**
(21) Anmeldenummer: 12196888.7
(22) Anmeldetag: 13.12.2012
(51) Int. Cl.: H02K 3/12, H02K 3/18, H02K 15/02, H02K 15/095

(54) **Stator für einen Elektromotor sowie Verfahren zur Herstellung eines Stators für einen Elektromotor**
Stator for an electric motor and method for manufacturing a stator for an electric motor
Stator pour un moteur électrique et procédé de fabrication d'un stator pour un moteur électrique

(30) Priorität: 14.12.2011 DE 102011088519
(43) Veröffentlichungstag der Anmeldung: 19.06.2013
(73) Patentinhaber: Metabowerke GmbH, 72622 Nürtingen (DE)
(72) Erfinder: Schmohl, Michael, 72119 Ammerbuch (DE); Ebner, Felix, 73033 Göppingen (DE); Flöte, Enrico, 72636 Frickenhausen-Linsenhofen (DE)
(74) Vertreter: Raunecker, Klaus Peter

(56) Entgegenhaltungen:
- EP-A1- 1 848 091
- EP-A2- 0 553 899
- DE-A1-102006 055 519
- DE-A1-102007 029 741
- US-A1- 2005 057 113
- US-A1- 2006 097 602

## Beschreibung

Die vorliegende Erfindung betrifft einen Stator für einen Elektromotor sowie ein Verfahren zur Herstellung eines Stators für einen Elektromotor.

Derartige Statoren werden in elektrischen Antrieben bzw. Elektromotoren eingesetzt, die neben einem Stator auch einen Rotor umfassen. Eine übliche Anwendung solcher elektrischer Antriebe findet sich bei Haushaltsgeräten und Elektrowerkzeugmaschinen.

Ein Stator eines elektrischen Antriebs bzw. eines Elektromotors mit einem entsprechenden Rotor weist in der Regel einen Statorkörper mit einer geschlossenen Statorwand und daran angeordneten Polhörnern bzw. Polspitzen auf. Innerhalb dieser Polhörner ist der Rotor des elektrischen Antriebs angeordnet, welcher sich um eine Drehachse innerhalb des Stators relativ zu diesem rotatorisch bewegt. Der Statorkörper, welcher üblicherweise aus eisenhaltigen Werkstoff (Eisen) hergestellt ist, weist einen Spulenraum auf, der eine Anzahl von Spulennuten umfasst, die von den jeweiligen Polhörnern und der Statorwand des Stators begrenzt werden. In diese Spulennuten wird üblicherweise ein isolierter Spulendraht bzw. werden aus einem derartigen Draht gefertigte Feldspulen eingelegt.

Elektrische Antriebe mit einem Stator sowie einem darin angeordneten Rotor sind in der Regel luftgekühlt, wobei Umgebungsluft in den elektrischen Antrieb eingesaugt und durch diesen hindurch gezogen wird. Die durch den elektrischen Antrieb hindurchströmende Luft führt die Wärme von dem Spulendraht ab und stellt dabei sicher, dass der elektrische Antrieb ausreichend Leistung abgeben kann, ohne zu überhitzen.

Als Nachteil in Zusammenhang mit der Luftkühlung elektrischer Antriebe hat sich in der Praxis gezeigt, dass in der Kühlungsluft oftmals Staubpartikel enthalten sind, die an dem Spulendraht angreifen und dadurch zu einer Abrasion des Spulendrahts führen können.

Um diesem Problem zu begegnen, ist es aus der Praxis bekannt, handeingelegte, vorgewickelte Spulen vor dem Einlegen in den Spulenraum mit einer Bandage und/oder Isolierpapier zu umwickeln. So beschreiben beispielsweise die aus dem Stand der Technik bekannten Druckschriften US 2005/057 113 A1, DE 10 2006 055 519 A1, US 2006/097 602 A1 und EP 1 848 091 A1 allesamt Lösungen für einen Stator, bei dem die Spule in einem separaten Abreitsgang vorgewickelt und gegebenenfalls isoliert wird, ehe sie in den Spulenraum des Stators eingelegt wird.

Wenngleich die Möglichkeit der vollständigen Isolation einer vorgewickelten Spule, wie beispielsweise in der DE 10 2006 055 519 A1 oder der US 2005/0057113 A1 beschrieben ist Vorteile bringt, ist jedoch dieser zusätzliche Arbeitsschritt des Umwickelns der vorgewickelten Spule äußerst aufwendig und somit sowohl zeit- also auch kostenintensiv bei der Herstellung. Weitere Nachteile von handeingelegten, vorgewickelten Spulen ergeben sich aus dem ebenfalls kosten- und zeitintensiven Schritt des Handeinlegens der Spule in den Spulenraum und aus dem Umstand, dass der Spulenraum bei handeingelegten Spulen niemals vollständig ausgenutzt werden kann, da stets ein geringer Spalt zwischen der Spulennut und der eingelegten vorgewickelten Spule verbleibt. Dieses Problem beschreibt beispielsweise die US 2005/0057113 A1 im Zusammenhang mit den überstehenden Abschnitten der eingelegten Spule und schlägt als eine denkbare Lösung die Verwendung eines Schaums als Stütz- und Isolationsmaterial vor.

Die DE 10 2006 055 519 A1 beschreibt als weiteres Problem die Vibrationen, denen ein Stator im Betrieb ausgesetzt ist, woraus sich das Erfordernis ableitet, die vorgewickelte Spule sicher und fest in dem Spulenraum des Stators aufzunehmen. Als Lösung schlägt die Druckschrift vor, die Spulenwicklungen mittels eines Klebstoffs stoffschlüssig mit dem Statorkern zu verbinden.

Die EP 1 848 091 A1 beschreibt alternativ zu einem manuellen Einlegeverfahren ein maschinelles Einlegeverfahren für eine vorgewickelte Spule, bei dem nach dem Einlegen der ringförmigen Spule in den Spulenraum eines halbschalenformigen Statorteils die Spule und das Statorteil mittels eines Stempels durch Pressen umgeformt werden, um diese sicher miteinander zu verbinden und an ihre endgültige Form anzupassen.

Alternativ wird der Spulenraum eines Statorkörpers direkt mit Spulendraht bewickelt, vorzugsweise mit Hilfe einer Nadelwickelmaschine oder dergleichen, da hierdurch eine höhere Packungsdichte des Spulendrahts in dem Spulenraum erreicht wird und weiterhin eine Schnellbewicklung erfolgen kann. In diesem Fall wird der Spulendraht mit einem Füllgrad von weniger als 100 % der Spulennuten eingelegt.

Nachteilig hierbei ist jedoch, dass nicht der gesamte zur Verfügung stehende Bauraum zur Ausbildung der Spulen genützt werden kann.

Aus dem Stand der Technik, insbesondere aus der EP 0 553 899 A2, ist zudem eine Lösung bekannt, bei der mittels einer Wickelschablone eine Direktbewicklung eines einteiligen Statorkörpers mit einer Bewicklung über den Spulenraum hinaus erreicht werden kann.

Eine Aufgabe der vorliegenden Erfindung besteht folglich darin, einen kompakten, robusten, leistungsfähigen Elektromotor bereit zu stellen.

Diese Aufgabe wird erfindungsgemäß durch ein Verfahren mit den Merkmalen des Anspruchs 1 gelöst sowie einen mittels dieses Verfahrens hergestellten Stator mit den Merkmalen des Anspruchs 9 gelöst. Die Unteransprüche betreffen vorteilhafte Ausführungsformen und Weiterbildungen der Erfindung.

Der erfindungsgemäße Stator, welcher gemäß den Verfahrensschritten des Anspruchs 1 hergestellt ist, umfasst einen Statorkörper mit einem Spulenraum zur Aufnahme eines Spulendrahts in Form einer Spule, wobei der an einem Statorsegment des Statorkörpers ausgebildete Spulenraum mehrere Nuten umfasst, die von einer Statorwand und Polhörnern des Stators begrenzt werden. Erfindungsgemäß ist der Spulendraht im Bereich zwischen zwei Polhörnern über die Nut hinaus gewickelt.

Dadurch, dass zumindest teilweise eine stoffschlüssige Verbindung der Windungen der Spule untereinander mindestens in Teilen des außerhalb der Nut befindlichen Bereiches der Spule vorhanden ist, kann erreicht werden, dass die Spule auch ohne die stützende Wirkung der Polhörner mechanisch stabil bleibt.

Die stoffschlüssige Verbindung kann dadurch erreicht werden, dass der Spulendraht mindestens teilweise als Backlackdraht ausgebildet ist. Unter einem Backlackdraht wird ein Spulendraht verstanden, der eine temperaturfeste Grundisolation und eine durch Erhitzen verklebende, oft auch dabei polymerisierende Deckschicht aufweist.

Dadurch, dass 40-60% des Spulendrahtes außerhalb der Nut angeordnet sind, kann der zur Verfügung stehende Bauraum besonders vorteilhaft ausgenützt werden.

Dadurch, dass die stoffschlüssige Verbindung mindestens teilweise durch ein Träufelharz gebildet ist, kann eine besonders dauerhafte mechanische Stabilisierung der Spule erreicht werden.

Das erfindungsgemäße Verfahren zum Herstellen eines oben beschriebenen Stators umfasst die folgenden Schritte:
- Bereitstellen von einem Statorkörper mit mindestens zwei Statorsegmenten, die als identische Teile ausgebildet sind und jeweils einen an einem Statorsegment ausgebildeten Spulenraum zur Aufnahme eines Spulendrahts in Form einer Spule aufweisen, wobei der Spulenraum eine Nut aufweist;
- Einsetzen einer Wickelschablone in ein Statorsegment; Einlegen eines Isolierpapiers (30) mit einem radialen Überstand (32) über die Polspitzen 16 der jeweiligen Statorhälften 12 hinaus auf;
- nach Innen ziehen des radialen Überstandes (32) während des nachfolgenden Wickelvorgangs, um während des Bewickelns sicherzustellen, dass das Isolierpapier (30) nicht durch den Spulendraht (20) geknickt wird;
- Einbringen des Spulendrahts in den an einem Statorsegment des Statorkörpers ausgebildeten Spulenraum, wobei der Spulendraht im Bereich zwischen zwei Polhörnern über die Nut hinaus gewickelt wird;
- mindestens teilweise stoffschlüssiges Verbinden der Windungen der Spule untereinander mindestens in Teilen des außerhalb der Nut befindlichen Bereiches der Spule; und
- Entfernen der Wickelschablone.

Wenn beispielsweise das stoffschlüssige Verbinden unter Verwendung eines Backlackdrahtes als Spulendraht vorgenommen wird, kann dies beispielsweise dadurch bewerkstelligt werden, dass der Backlackdraht mit einem elektrischen Strom beaufschlagt und dadurch erhitzt wird.

Für eine provisorische Stabilisierung der Spule für die nachfolgenden Handhabungsschritte im Rahmen des Produktionsprozesses genügt es, wenn ein elektrischer Strom mit einer Stromstärke im Bereich von 30-70A, insbesondere von 50A, für einen Zeitraum von weniger als 10 Sekunden, beispielsweise für 3-5 Sekunden, insbesondere für 4 Sekunden, verwendet wird. Dadurch können die Taktzeiten in der Fertigung gering gehalten werden. Beispielsweise können die Windungen für 5 Sekunden auf eine Temperatur von ca. 200°C gebracht werden.

Insbesondere zur endgültigen stoffschlüssigen Verbindung der Windungen kann zusätzlich oder alternativ ein Träufelharz verwendet werden. Dabei kann der Statorkörper in das Träufelharz eingetaucht werden. Das Eintauchen oder anderweitige Versehen der Spule mit dem Träufelharz kann parallelisiert werden. So kann beispielsweise eine Vielzahl von Statorkörpern gleichzeitig in ein Träufelharzbad eingetaucht werden, so dass der Quotient aus Aushärtezeit des Träufelharzes und der Anzahl der gleichzeitig behandelten Statorköpfe die Taktzeit dieses Schrittes pro gefertigtem Statorkopf bestimmt. Gegenüber dem Stand der Technik ergibt sich damit der Vorteil, dass der praktisch nicht parallelisierbare Schritt des Bestromens des Backlackdrahtes zeitlich kurz gehalten werden kann.

Beispielsweise können die Statorkörper nach der oben beschriebenen provisorischen Fixierung durch die Erwärmung der Windungen in ein Träufelharzbad mit einer Temperatur im Bereich von 100°C-140°C, insbesondere von 120°C getaucht werden.

Nachfolgend wird die Erfindung anhand der Zeichnung näher erläutert.

Die beigefügten Figuren zeigen beispielhaft eine bevorzugte Ausführungsform, bei der die einzelnen Merkmale der Erfindung miteinander kombiniert sind. Der Fachmann wird diese jedoch selbstverständlich auch losgelöst voneinander betrachten und/ oder zu anderen sinnvollen Kombinationen zusammenfassen können.

Es zeigen schematisch:
- Figur 1: eine isometrische Ansicht eines zweipoligen Stators;
- Figur 2: einen Querschnitt senkrecht zu der Längsachse des Stators der Figur 1;
- Figur 3: eine Draufsicht auf eine Statorhälfte des Stators gemäß Figuren 1 und 2;
- Figur 4: eine Detailansicht einer Verbindungsstelle eines Stators gemäß Figuren 1 und 2;
- Figur 5a: eine Detailansicht einer Statorhälfte mit einem Temperatursensorelement in einer ersten Ausführungsform;
- Figur 5b: eine Detailansicht einer Statorhälfte mit einem Temperatursensorelement in einer zweiten Ausführungsform;
- Figur 6: eine Wickelschablone, welche bei einem Wickelvorgang eines erfindungsgemäßen Stators verwendet werden kann;
- Figur 7: in einer Ansicht von der Außenseite her eine in eine Statorhälfte eingesetzte Wickelschablone nach einem Wickelvorgang;
- Figur 8: in einer isometrischen Ansicht einen mit einer Beschichtung versehenen Stator; und
- Figur 9: eine Schnittdarstellung des in Figur 8 gezeigten Stators.

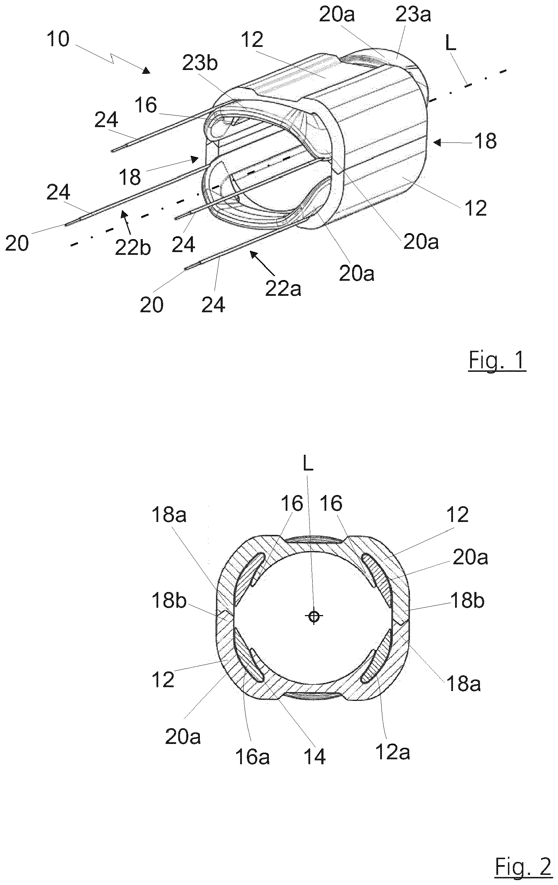

In der Figur 1 ist ein zweipoliger Stator eines elektrischen Antriebs gezeigt und allgemein mit dem Bezugszeichen 10 bezeichnet. Dieser zweipolige Stator umfasst einen Statorkörper, welcher im Bereich einer sich entlang einer Längsachse L des Stators erstreckenden Trennungsebene in zwei Statorsegmente bzw. Statorhälften 12 geteilt ist. Die beiden Statorhälften 12 sind dabei als identische Teile ausgebildet, was die Herstellung des Statorkörpers besonders einfach macht. In üblicher Weise ist der dargestellte Statorkörper des Stators 10 durch Stanzpaketieren von identischen Blechlamellen zu einem Blechpaket hergestellt.

Weiterhin umfasst jede der Statorhälften 12 zwei Polhörner bzw. Polspitzen 16 (vgl. auch Fig. 2), die sich von der Innenumfangsfläche 12a der jeweiligen Statorhälfte 12 nach innen erstrecken und somit den Innenraum des Stators 10 für einen darin aufzunehmenden Rotor (nicht dargestellt) begrenzen.

Die beiden Statorhälften 12 sind im Bereich zweier Verbindungsstellen 18 miteinander verbunden, wobei jede Statorhälfte 12 eine erste Verbindungsstelle 18a sowie eine zweite Verbindungsstelle 18b aufweist.

Weiterhin sind in Figur 1 Endabschnitte bzw. Drahtenden 22a und 22b eines spulenförmig, d.h. in der Form einer Spule 20a mit einer Wicklungsstruktur und Wickelköpfen 23a und 23b, eingelegten Spulendrahts 20 zu erkennen. Wie aus Figur 1 ersichtlich, sind die Drahtenden 22a, 22b als Anschlussdrähte jeweils mit einem Schrumpfschlauch 24 als Schlauchelement versehen, welches nicht außerhalb des Stators 10 endet, sondern in den Stator 10 eingeschoben ist, d.h. in die Wicklungsstruktur der Spule 20a hineinragt, um eine optimale Isolierung zu erreichen und einen Schutz vor leitfähigen Ablagerungen zu erhalten. Als Schlauchelemente kommen auch Glasgewebeschläuche in Betracht.

In anderen Ausführungsbeispielen könnte statt des Schlauchelements auch ein Hülsenelement vorgesehen sein.

Wie in Figur 2 deutlich zu erkennen ist, wird die erste Verbindungsstelle 18a der beiden Statorhälften 12 jeweils durch eine entlang der Längsachse L verlaufende dreieckförmige Nut 18a gebildet, während die zweite Verbindungsstelle 18b durch einen korrespondierenden entlang der Längsachse L verlaufenden dreieckförmigen Vorsprung 18b gebildet ist. Durch die spezielle Ausbildung der ersten und zweiten Verbindungsstelle 18a und 18b kann eine einfache Herstellung der Verbindungsstellen 18 ermöglicht werden.

Weiterhin wird durch die Ausprägung der ersten und zweiten Verbindungsstellen 18a und 18b eine Ausrichtung der Statorhälften 12 zueinander erreicht, wenn die jeweils korrespondierende erste Verbindungsstelle 18a mit der zweiten Verbindungsstelle 18b in Anlage gebracht wird. Schließlich kann durch diese spezielle Ausgestaltung der Verbindungsstellen 18 gewährleistet werden, dass die Statorhälften 12 bei der Herstellung des Statorkörpers in direkter Anlage zueinander aus dem Material ausgestanzt werden können, was zu einem geringeren Anfallen von Verschnitt gegenüber dem Stand der Technik führt.

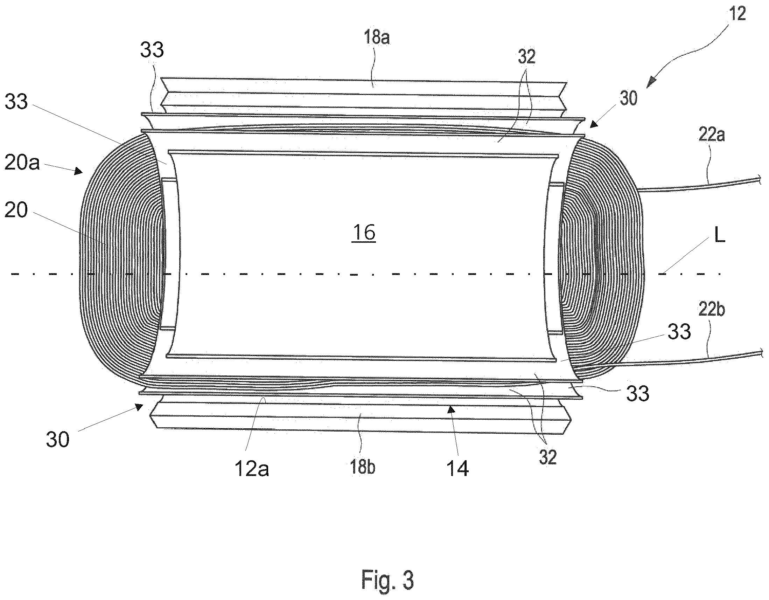

In Figur 2 ist ebenfalls deutlich gezeigt, dass die Statorinnenwand 12a und die radial äußere Wand 16a der Polhörner 16 eine Nut 14 begrenzen, in welche der aus Kupfer hergestellte Spulendraht 20 aufgenommen werden kann. Wie in den Figuren (vgl. insbesondere Figuren 2 und 3) zu erkennen ist, wird der Spulendraht 20 in der Form einer Spule 20a in den durch die Nuten 14 einer Statorhälfte 12 ausgebildeten Spulenraum eingelegt.

In Figur 2 ist weiterhin gezeigt, dass der eingelegte Spulendraht 20 nicht wie in der Praxis üblich mit einem Füllgrad von weniger als 100 % in die Nut 14 eingelegt ist, sondern über die Nut 14 hinaus gewickelt ist. Darin ist eine Besonderheit der vorliegenden Erfindung zu sehen, da durch einen Füllgrad von mehr als 100 % eine erhöhte Leistung eines Elektromotors mit einem derart gewickelten Stator 10 gegenüber einem Elektromotor mit einem konventionell gewickelten Stator erreicht werden kann. Insbesondere ermöglicht es die in Figur 2 gezeigte Wicklungsform, insgesamt mehr Spulenwindungen in einem hohlzylindrischen Volumenelement (welches sich zwischen den Statorhälften und der Außenseite eines Ankers befindet) anzuordnen als nach dem Stand der Technik möglich. Bei gleichem beanspruchtem Bauraum kann so insgesamt mit der Spule 20a ein höherer magnetischer Fluss erzeugt werden und damit eine höhere Leistung des Elektromotors erreicht werden. Ebenso kann für eine gegebene Anzahl von Windungen die Spule 20a erheblich flacher ausgelegt werden als bisher nach dem Stand der Technik möglich, so dass bei gleicher Windungszahl ein Anker höheren Durchmessers verwendet werden kann. Damit ergibt sich gegenüber dem Stand der Technik ein höheres Drehmoment auf die Ankerwicklungen, was im Ergebnis ebenfalls zu einer Leistungssteigerung führt. Ebenso kann bei gleichbleibender Leistung eine Verkleinerung des Elektromotors und damit eine Verringerung des Fadenmaßes eines zugehörigen Elektrohandwerkzeuges erreicht werden.

Da in dem über die Nut 14 hinausgehenden Bereich die mechanisch stabilisierende Wirkung der Polhörner 16 wegfällt, sind zusätzliche Maßnahmen erforderlich, um zu gewährleisten, dass die Spule ihre Form beibehält und sich die Wicklungen nicht voneinander lösen.

Hierzu ist eine zumindest teilweise stoffschlüssige Verbindung der Windungen der Spule 20a untereinander mindestens in Teilen des außerhalb der Nut 14 befindlichen Bereiches der Spule 20a vorteilhaft. Diese stoffschlüssige Verbindung kann beispielsweise unter Verwendung eines Backlackdrahtes verwirklicht werden. Unter einem Backlackdraht wird ein Spulendraht verstanden, der eine temperaturfeste Grundisolation und eine durch Erhitzen verklebende, oft auch dabei polymerisierende Deckschicht aufweist. Zusätzlich oder alternativ kann die stoffschlüssige Verbindung auch mittels eines Träufelharzes geschaffen werden, welches aufgrund der Kapillarwirkung der Zwischenräume zwischen den Windungen in der Spule 20a die Spule 20a nach einem Eintauchen praktisch vollständig durchdringt.

Wie in Figur 3 gezeigt ist, umfasst der zweipolige Stator 10 mit seinen beiden Statorhälften 12 nicht nur einen durch die Statorhälften 12 gebildeten Statorkörper, der mit Spulendraht 20 bewickelt ist, sondern auch Isolierpapier 30, das in die Nuten 14 eingelegt wird, ehe der Spulendraht 20 auf die jeweilige Statorhälfte 12 aufgewickelt wird.

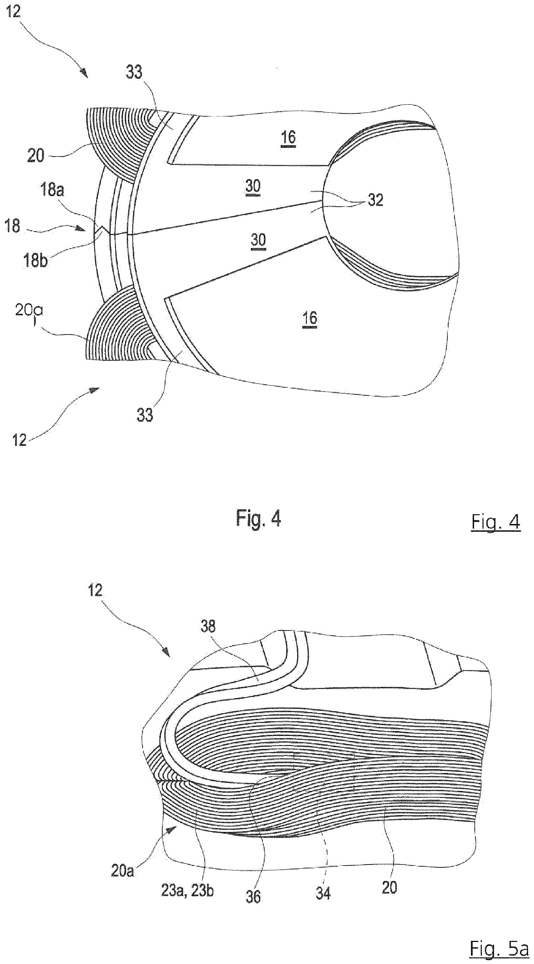

Das Isolierpapier 30 dient dazu, die durch den Spulendraht 20 gebildete Spule 20a im Betrieb eines den Stator 10 aufweisenden Elektromotors vor Abrasion zu schützen und elektrisch gegenüber dem Statorkörper sowie dem benachbarten Rotor (nicht gezeigt) zu isolieren. So ist gemäß der Norm DIN EN 60745 ein Mindestabstand von 2 mm Luftstrecke zwischen einem aktiven Teil, wie dem Statorkörper oder dem Rotor, und dem Spulendraht sicher zu stellen um eine elektrische Isolation zu gewährleisten. Diese wird bei dem vorstehend angesprochenen Füllgrad des Spulendrahts 20 über 100 % dadurch sichergestellt, dass das Isolierpapier 30 mit einem radialen Überstand 32 (vgl. auch Figur 4) über die jeweiligen Polhörner 16 hinaus vorgesehen ist.

Als radialer Überstand 32 wird der Teil des Isolierpapiers 30 verstanden, der bezogen auf die Längsachse L radial, d.h. in einer Richtung senkrecht zu der Längsachse L, über die Polhörner 16 übersteht.

Dabei kann der Überstand 32 des Isolierpapiers 30, wie in Figur 4 gezeigt, derart gewählt sein, dass zumindest die radial innenliegenden Abschnitte des überstehenden Isolierpapiers 32 dann, wenn die Statorhälften 12 zusammengesetzt sind, d. h. im Bereich ihrer Verbindungsstellen 18 aneinander anliegen, die Überstände 32 des Isolierpapiers 30 der beiden Statorhälften 12 ebenfalls aneinander anliegen bzw. sich überlappen. Zudem kann, wie in Figur 3 zu erkennen ist, auch ein (bezogen auf die Längsachse L des Stators 10) axialer Überstand 33 des Isolierpapiers 30 sinnvoll sein, um den elektrischen Sicherheitsabstand von 2 mm Luftstrecke zwischen Spulendraht und aktivem Eisen zu gewährleisten. Als axialer Überstand 33 wird der Teil des Isolierpapiers 30 verstanden, der bezogen auf die Längsachse L axial, d.h. in einer Richtung parallel zu der Längsachse L, über die Polhörner 16 übersteht.

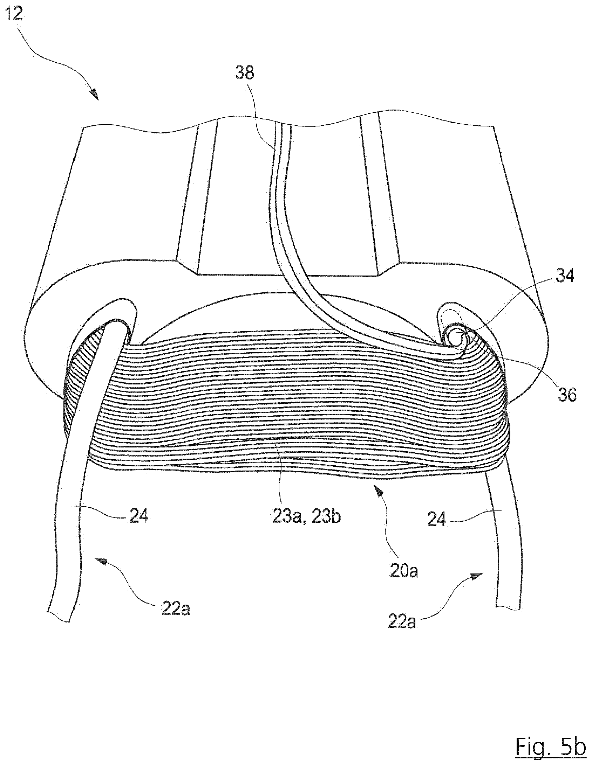

Wie aus Figur 5a ersichtlich, ist ein gestrichelt angedeutetes Temperatursensorelement 34 in einer Aussparung bzw. einem Hohlraum 36 in der Wicklungsstruktur der Spule 20a vorhanden, um die Temperatur der Spule 20a bzw. des Spulendrahts 20 während des Betriebs zu erfassen. Das Temperatursensorelement 34 ist wenigstens annähernd vollständig von der Spule 20a umgeben, so dass in Figur 5a lediglich die Anschlussleitungen 38 aus der Spule herausragen. Das Temperatursensorelement 34 kann nur in eine oder auch in beide Statorhälften 12 eingebracht werden. Wie aus Figur 5b ersichtlich, kann das Temperatursensorelement 34 alternativ auch in einem Hohlraum 36 in wenigstens einer der Spulennuten 14 untergebracht sein. Dazu kann das Temperatursensorelement 34 zwischen der Spule 20a einerseits und der Statorwand und/oder einem der Polhörner 16 andererseits angeordnet sein.

Eine weitere Besonderheit der vorliegenden Erfindung ist darin zu sehen, dass die beiden Drahtenden bzw. Drahtendabschnitte 22a, 22b, welche beim Wickelvorgang von der Spule 20a an den Statorhälften 12 entstehen, wie vorstehend erwähnt als Anschlussdrähte bzw. elektrische Anschlüsse des Elektromotors genutzt werden können. Hierfür werden die Drahtenden 22a, 22b in ausreichend großer Länge aus der Spule 20a herausgeführt, um die Funktion von aus dem Stand der Technik bekannten separaten Litzen zu übernehmen und einen Anschluss der Spule 20a an eine Stromquelle oder einen Stromverteiler (nicht gezeigt) zu ermöglichen. An den freien Enden der Drahtendabschnitte 22a, 22b können separate Anschlusselemente, beispielsweise in der Form einer Crimpkralle (nicht dargestellt) in der Weise befestigt werden, dass diese die isolierende Außenschicht (im dargestellten Beispiel eine isolierende Grundschicht sowie eine darauf aufgebrachte Backlackschicht) des Spulendrahts 20 durchdringen und eine elektrische Kontaktierung der Spule ermöglichen. Die Anschlusselemente (nicht dargestellt) können zudem in ihrer Außengeometrie in der Art eines Steckers ausgebildet sein, der in einen korrespondierenden Steckverbinder an der Stromquelle bzw. dem Stromverteiler des elektrischen Antriebs eingesteckt werden kann.

Nachfolgend wird der Herstellungsprozess eines zweipoligen Stators unter Bezugnahme auf die Figuren beschrieben:
Aus einem durch Stanzpaketieren von identischen Blechlamellen hergestellten Blechpaket werden die beiden Statorhälften 12 in Anlage zueinander ausgestanzt, die in einem weiteren Prozessschritt mit Kupferdraht bewickelt werden sollen.

Um im Betrieb eine ausreichende elektrische Isolation gewährleisten und ausreichend große Abstände zwischen der Spule und aktiven Teilen des Elektromotors bereitstellen zu können, wird, bevor die Statorhälften 12 bewickelt werden, Isolierpapier 30 in die Nuten 14 der jeweiligen Statorhälften 12 eingelegt.

Um zu gewährleisten, dass das Isolierpapier 30 relativ zu der jeweiligen Statorhälfte 12, in deren Nut 14 das Isolierpapier 30 eingelegt wird, fixiert ist, können die Statorhälften 12 in einem vorgeschalteten Prozessschritt vor dem Einlegen des Isolierpapiers 30 in die zugehörigen Nuten 14 zumindest in dem Bereich der Nuten erwärmt werden, beispielsweise auf eine Temperatur von wenigstens 150° Celsius. Das Isolierpapier 30 ist auf derjenigen Seite, mit der es in Anlage an die erwärmte Nut 14 der Statorhälften 12 kommen soll, zumindest abschnittsweise mit einem Backlack beschichtet. Das eingelegte Isolierpapier 30 kann dann, sobald es in die zugehörige Nut 14 eingelegt ist, für einige Sekunden an die Nutinnenseiten angepresst werden. Dabei schmilzt die Backlackbeschichtung an dem Isolierpapier 30 an und verklebt dieses mit der Statorhälfte 12. Eine Fixierung des Isolierpapiers 30 bei dem nachfolgenden Prozessschritt des Bewickelns ist folglich nicht mehr notwendig.

Das eingelegte Isolierpapier 30 weist dabei, wie bereits vorstehend beschrieben, einen radialen Überstand 32 über die Polspitzen 16 der jeweiligen Statorhälften 12 hinaus auf.
Dieser Überstand 32 kann während des nachfolgenden Wickelvorgangs zusätzlich nach radial innen gezogen werden, um während des Bewickelns sicherzustellen, dass das Isolierpapier 30 nicht durch den Spulendraht 20 geknickt wird.

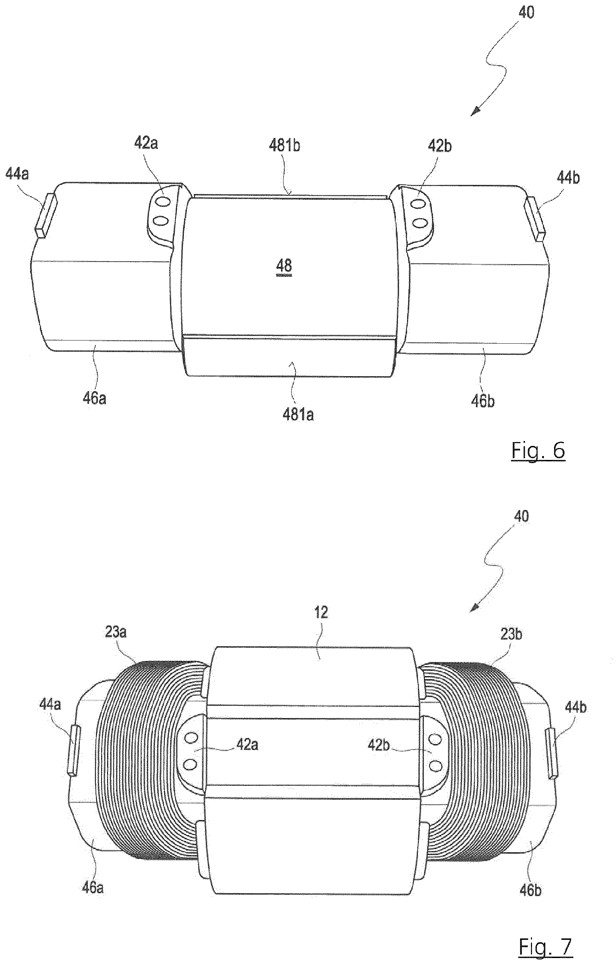

In einem weiteren Schritt wird jede der Statorhälften 12 automatisiert mit Hilfe eines Wickelarms mit dem Spulendraht 20 bewickelt. Um eine Bewicklung der Statorhälften 12 zu erreichen, bei der der Füllgrad der Spulennut 14 über 100 % liegt, kann eine wie in Fig. 6 dargestellte Wickelschablone 40 verwendet werden. Die Wickelschablone 40 zeigt dabei ein näherungsweise halbzylindrisches Mittelstück 48, an dessen Stirnseiten jeweils die beiden von diesem am Umfang etwas abgesetzten Schablonenenden 46a und 46b angeordnet sind. Dabei ist das Mittelstück 48 dazu vorgesehen, von der Innenseite her auf eine Statorhälfte 12 aufgesetzt zu werden, wobei es mittels der Schablonenenden 46a und 46b auf dieser in Axialrichtung zentriert wird. Das Mittelstück 48 zeigt dabei die Anlagenflächen 481a und 481b, welche bei eingesetzter Wickelschablone 40 über die Polhörner der Statorhälfte überstehen und so eine zusätzliche temporäre Nut schaffen, in welcher der Spulendraht 20 gewickelt werden kann, wobei er dort während und nach dem Wickelvorgang mittels der Wickelschablone 40 in dieser temporären Nut geführt und gehalten wird.

Ferner zeigt die in Fig. 6 dargestellte Wickelschablone 40 auf ihren Schablonenenden 46a und 46b jeweils einen äußeren Fortsatz 44a, 44b und einen inneren Fortsatz 42a, 42b. Zwischen den Fortsätzen 42a und 44a bzw. 42b und 44b kann beim Wickelvorgang der Spulendraht 20 ebenfalls geführt bzw. angeordnet werden, so dass sich über die Statorhälfte 12 hinausstehend ein Wickelkopf mit einer definierten Form ergibt. Im Unterschied zum Stand der Technik kann also durch die Verwendung der Wickelschablone 40 einerseits erreicht werden, dass auch Bereiche außerhalb der Nut 14 mit Spulendraht 20 gefüllt werden und andererseits auch, dass eine definierte Form eines Wickelkopfes geschaffen werden kann.

Fig. 7 zeigt in einer Ansicht von der Außenseite her die in der Statorhälfte 12 eingesetzte Wickelschablone 40 nach dem Wickelvorgang. Gut erkennbar ist die definierte Ausbildung der Wickelköpfe 23a, b, welche durch die Fortsätze 42a, 44a und 42b, 44b erreicht werden kann. Ansonsten entsprechen die in der Fig. 7 verwendeten Bezugszeichen den bereits in der Fig. 6 verwendeten.

Bevor diese Schablone wieder entnommen wird, um den Statorkörper weiteren Fertigungsschritten zuzuführen, wird die Spule 20a mindestens teilweise verbacken bzw. "angebacken". Aus diesem Grund wird bei dem vorliegenden Herstellungsprozess ein Backlackdraht als Spulendraht 20 verwendet, d.h. ein Kupferdraht mit einer temperaturfesten Grundisolation und einer zusätzlichen Backlack-Deckschicht, welche bei Temperaturen von etwa 150°C bis 200°C erweicht und aushärtet, so dass die einzelnen Spulenwindungen der Spule 20a von dem ausgehärteten Backlack zumindest für die nachfolgenden Handhabungsschritte während der Fertigung in einem Verbund miteinander gehalten werden. Um den Backlack entsprechend zu erwärmen, wird Strom in die Spule 20a eingeleitet, so dass diese sich infolge ihres elektrischen Widerstands auf die gewünschte Temperatur (etwa 150°C bis 200°C) erhitzt. Für eine vorläufige Stabilisierung der Spule 20a genügt ein Stromfluss von ca. 50A für einen Zeitraum für ca. 4s, wodurch die Taktzeiten der Fertigung gering gehalten werden können. In diesem Verfahrensschritt, in dem die einzelnen Drahtwindungen zu einer Spule 20a verbacken werden, kann auch der Überstand 32 des Isolierpapiers 30 an die Spule 20a angebacken werden. Dabei kann das Isolierpapier 30 hierfür ebenfalls eine Backlackbeschichtung zumindest im Bereich seines Überstands 32 auf der der Spule 20a zugewandten Seite aufweisen.

Alternativ ist es jedoch ebenfalls denkbar, das Isolierpapier direkt an der Backlackbeschichtung des Spulendrahtes oder mit Hilfe eines separat aufzubringenden Beschichtungsmittels an der Spule zu verbacken. Weiterhin ist auch denkbar, ein anderes Beschichtungsmittel bzw. eine andere Deckschicht als Backlack zur Fixierung der Spulenwindungen aneinander einzusetzen.

Ein nicht dargestelltes Platzhalterelement, insbesondere ein Stift oder dergleichen kann in den Bereich des Spulenraums in der Weise eingelegt werden, dass sich beim automatisierten Einlegen des Spulendrahts 20 in den Spulenraum der durch das Platzhalterelement begrenzte Hohlraum 36 in der Wicklungsstruktur der Spule 20a oder in wenigstens einer der Spulennuten 14 ergibt. Nach dem Entfernen des Platzhalterelements aus der Wicklungsstruktur der Spule 20a oder aus der wenigstens einen Spulennut 14 kann in den verbleibenden Hohlraum 36 das Temperatursensorelement 34 eingeführt werden.

Die Wickelschablone 40 ist beispielsweise derart ausgebildet, dass in einem Bereich der gewickelten Spule 20a die entsprechende Ausnehmung bzw. der Hohlraum 36 verbleibt, in den in einem weiteren Prozessschritt das Temperatursensorelement 34 in die gewickelte Spule 20a eingeführt werden kann. Alternativ kann das von der Wickelschablone separate Platzhalterelement verwendet werden. Das Temperatursensorelement 34 wird in dem wenigstens einen Hohlraum 36 der Spule 20a fixiert. Dies kann mittels des Fixiermittels für den Spulendraht 20 erfolgen. Alternativ ist es jedoch ebenfalls denkbar, das Temperatursensorelement 34 direkt an der Backlackbeschichtung des Spulendrahts 20 zu verbacken oder mit Hilfe eines zusätzlichen separat aufzubringenden Sensorfixiermittels an der Spule 20a zu fixieren. Dazu kann das Temperatursensorelement 34 wenigstens teilweise mit dem Sensorfixiermittel beschichtet werden. Das Platzhalterelement und damit auch der Hohlraum 36 kann im Bereich des Wickelkopfes 23a, b oder in einer der Spulennuten 14 zwischen der Spule 20a einerseits und der Statorwand und/oder einem der Polhörner 16 andererseits vorgesehen werden. Das zusätzliche Sensorfixiermittel kann z. B. Klebstoff, Träufelharz oder Backlack umfassen.

Darüber hinaus kann ein vorstehend genanntes Platzhalterelement in den Bereich des Spulenraums in der Weise eingelegt werden, dass sich beim automatisierten Einlegen des Spulendrahts 20 in den Spulenraum ein nicht dargestellter, durch das Platzhalterelement begrenzter, Hohlraum im Bereich der Endabschnitte 22a, 22b in der Wicklungsstruktur der Spule 20a ergibt. Nach dem Entfernen des Platzhalterelements aus der Wicklungsstruktur der Spule 20a kann der Schrumpfschlauch 24 auf das jeweilige Drahtende 22a, 22b aufgebracht und in den verbleibenden Hohlraum in der Wicklungsstruktur der Spule 20a eingeführt werden. Anschließend wird der Schrumpfschlauch 24 mittels eines Schlauchfixiermittels in der Wicklungsstruktur der Spule 20a fixiert. Das Schlauchfixiermittel kann Klebstoff oder Träufelharz, vorzugsweise ein dual härtendes Harz umfassen.

Schließlich können die Anschlusselemente an den freien Enden der Drahtendabschnitte 22a, 22b befestigt werden, wobei diese bevorzugt nicht nur an den Drahtendabschnitten 22a, 22b angreifen, sondern im befestigten Zustand auch den Schrumpfschlauch 24 durchdringen, um auf diese Weise eine optimale Isolation und Schutzwirkung zum Schutz der Drahtendabschnitte 22a, 22b bereitstellen zu können.

Nachdem die beiden Statorhälften 12 auf diese Weise hergestellt und bewickelt sind, werden diese miteinander verbunden, um gemeinsam den Statorkörper zu bilden. Hierzu werden die beiden Statorhälften 12 im Bereich ihrer Verbindungsstellen 18 aneinander angelegt, wobei jeweils eine erste Verbindungsstelle 18a einer Statorhälfte 12 in Anlage mit einer zweiten Verbindungsstelle 18b der jeweils anderen Statorhälfte 12 gebracht wird.

Die beiden aneinander anliegenden Statorhälften 12 können in einem weiteren Schritt mittels Tauchimprägnierung aneinander fixiert werden. Hierzu können die beiden aneinander anliegenden Statorhälften 12 bzw. die aufgewickelte Spule 20a erwärmt und in ein Tauchbad, insbesondere mit dual härtendem Harz (Träufelharz bzw. Dualharz) eingetaucht werden, welches sowohl unter Wärmeeinwirkung als auch unter UV-Licht aushärtet. Aufgrund der Kapillarwirkung der Zwischenräume zwischen den einzelnen Windungen der Spule 20a wird diese weitgehend von dem Träufelharz durchsetzt. Dadurch, dass die Spule 20a erwärmt wird, kann das Harz an der Spule 20a und insbesondere auch im Inneren der Spule 20a zwischen den Windungen bereits während des Tauchvorgangs aushärten, wodurch die gesamten Spule 20a mechanisch soweit stabilisiert werden kann, dass sie der mechanischen Beanspruchung im späteren Einsatz standhält. In den Außenbereichen des Stators 10, die nicht die gleiche Temperatur wie die Spule 20a haben, kann im Fall der Verwendung eines Dualharzes das Harz in einem weiteren Schritt mittels UV-Licht ausgehärtet werden.

Die Tauchimprägnierung dient nicht nur als zusätzlicher Schutz des gesamten Statorkörpers vor Abrasion, sondern auch als Statorfixiermittel zur stoffschlüssigen Verbindung der Statorhälften 12 miteinander. Grundsätzlich ist es jedoch auch denkbar, vor dem Schritt der Tauchimprägnierung die beiden Statorhälften beispielsweise durch Kleben, Schweißen oder Löten oder dergleichen stoffschlüssig miteinander zu verbinden. Dabei ist sowohl denkbar, nur einzelne Fixierungspunkte anzubringen, als auch eine Verbindungsnaht entlang der Verbindungsstellen 18 vorzusehen, um die Statorhälften während der Tauchimprägnierung in ihrer relativen Lage zueinander zu halten.

Das Statorfixiermittel, d.h. in dem beschriebenen Fall das Dualharz kann auch als Schlauchfixiermittel dienen bzw. als Sensorfixiermittel.

Die vorstehend beschriebene Tauchimprägnierung ist äußerst vorteilhaft, da diese eine Beschichtung von Spule und Statorkörper sowie das Fixieren der Statorhälften aneinander in einem einzigen Prozessschritt ermöglicht. Weiterhin wird durch die verwendete Tauchimprägnierung sichergestellt, dass der Stator ein in sich sowohl elektrisch optimal isoliertes als auch gegen Abrasion geschütztes Gesamtsystem bildet. Das vorstehend beschriebene teilweise Verbacken bzw. Anbacken der Spulenwindungen kann durch die Kombination mit dem weiteren Prozessschritt des Tauchimprägnierens innerhalb eines Zeitfensters von etwa 3 Sekunden vorgenommen werden, da hierdurch die Windungen der Spule nur relativ zu einander in dem Maße gesichert werden müssen, dass die Wickelschablone entnommen werden kann. Die in einem weiteren Prozessschritt vorgenommene Tauchimprägnierung sichert die ausreichende Stabilität der Spule im Betrieb des elektrischen Antriebs. Wollte man die Spule nur durch Verbacken der Backlackbeschichtung des Spulendrahtes fixieren, wären höhere Backzeiten in der Wickelmaschine notwendig, was insgesamt die Taktzeit bei der Herstellung unvorteilhaft erhöhen würde.

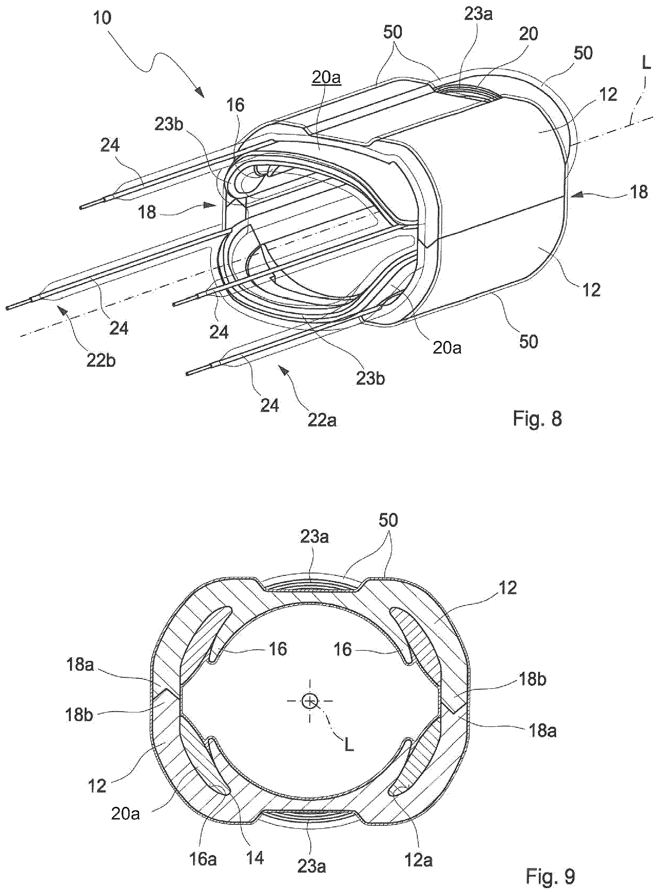

In den Figuren 8 und 9 ist ein Stator 10 gezeigt, welcher wie vorstehend beschrieben mittels einer Tauchimprägnierung beschichtet wurde. Grundsätzlich sind auch andere Beschichtungsverfahren zur Erzeugung des beschichteten Stators 10 wie bspw. Besprühen denkbar. Die in den Figuren 8 und 9 verwendeten Bezugszeichen entsprechen weitgehend den bereits in den Figuren 1 und 2 verwendeten.

Fig. 8 zeigt in einer isometrischen Ansicht einen Stator 10, bei welchem die Wickelköpfe 23a und 23b mit der gemeinsamen Beschichtung 50 versehen sind. Gut erkennbar in Fig. 8 ist, dass die gemeinsame Beschichtung 50 im vorliegend gezeigten Ausführungsbeispiel den Statorkörper an seiner Innen- und Außenseite sowie die Wickelköpfe 23a und 23b wie auch die mit dem Schrumpfschlauch 24 versehenen Drahtenden 22a, 22b bedeckt. Es wird also im vorliegenden Ausführungsbeispiel über den gesamten Stator 10 hinweg eine durchgängige Beschichtung 50 ausgebildet, welche sämtliche Komponenten wirksam schützt und aufgrund ihrer Ausbildung als gemeinsame Beschichtung keine harten Absätze oder Übergänge ausbildet, an welchen abrasiv wirkende Partikel in der vorbeiströmenden Luft angreifen könnten.

Fig. 9 zeigt in einem zur Achse L senkrechten Schnitt den Verlauf der Beschichtung 50. Gut erkennbar aus Fig. 9 ist, dass die Beschichtung 50 im Bereich des Statorkörpers etwas dünner ausgebildet ist als im Bereich der Wickelköpfe 23a. Die dickere Beschichtung im Bereich der Wickelköpfe 23a ist insbesondere auch deswegen vorteilhaft, weil diese in der Regel am stärksten einem abrasiv wirkenden Partikelstrom in der Kühlluft ausgesetzt sind.

Der in den Figuren 8 und 9 gezeigte Stator 10 kann nachfolgend in ein Motorgehäuse (nicht gezeigt) eingesetzt werden.

## Patentansprüche

1. Verfahren zum Herstellen eines Stators (10) umfassend die Schritte:
- Bereitstellen von einem Statorkörper mit mindestens zwei Statorsegmenten (12), die als identische Teile ausgebildet sind und jeweils einen an einem Statorsegment ausgebildeten Spulenraum zur Aufnahme eines Spulendrahts (20) in Form einer Spule (20a) aufweisen, wobei der Spulenraum eine Nut (14) aufweist,
- Einsetzen einer Wickelschablone (40) in ein Statorsegment (12) ;
- Einlegen eines Isolierpapiers (30) mit einem radialen Überstand (32) über die Polspitzen (16) der jeweiligen Statorhälften (12) hinaus auf;
- nach Innen ziehen des radialen Überstandes (32) während des nachfolgenden Wickelvorgangs, um während des Bewickelns sicherzustellen, dass das Isolierpapier (30) nicht durch den Spulendraht (20) geknickt wird;
- Einbringen des Spulendrahts (20) in den Spulenraum, wobei der Spulendraht (20) im Bereich zwischen zwei Polhörnern (16) über die Nut (14) hinaus gewickelt wird,
- mindestens teilweise stoffschlüssiges Verbinden der Windungen der Spule (20a) untereinander mindestens in Teilen des außerhalb der Nut (14) befindlichen Bereiches der Spule (20a); und
- Entfernen der Wickelschablone (40).

2. Verfahren nach Anspruch 1, **dadurch gekennzeichnet, dass** das stoffschlüssige Verbinden unter Verwendung eines Backlackdrahtes als Spulendraht (20) vorgenommen wird.

3. Verfahren nach Anspruch 2, **dadurch gekennzeichnet, dass** das stoffschlüssige Verbinden dadurch vorgenommen wird, dass der Backlackdraht mit einem elektrischen Strom beaufschlagt und dadurch erhitzt wird.

4. Verfahren nach Anspruch 3, **dadurch gekennzeichnet, dass** ein elektrischer Strom mit einer Stromstärke im Bereich von 30-70A, insbesondere von 50A, für einen Zeitraum von 3-5 Sekunden, insbesondere für 4 Sekunden, verwendet wird.

5. Verfahren nach einem der vorangehenden Ansprüche, **dadurch gekennzeichnet, dass** zur stoffschlüssigen Verbindung der Windungen zusätzlich oder alternativ ein Träufelharz verwendet wird.

6. Verfahren nach Anspruch 5, **dadurch gekennzeichnet, dass** der Statorkörper in das Träufelharz eingetaucht wird.

7. Verfahren nach einem der Ansprüche 3-6, **dadurch gekennzeichnet, dass** zunächst eine provisorische Fixierung der Windungen durch Strombeaufschlagung vorgenommen wird und nachfolgend zur endgültigen Fixierung ein Träufelharz verwendet wird.

8. Verfahren nach einem der Ansprüche 1 bis 7, **dadurch gekennzeichnet, dass** 40-60% des Spulendrahtes (20) außerhalb der Nut (14) angeordnet sind.

9. Stator (10) eines elektrischen Antriebs, der nach dem Verfahren gemäß einem der Ansprüche 1 bis 8 hergestellt ist, wobei der Stator (10) umfasst:
- einen Statorkörper mit einem Spulenraum zur Aufnahme eines Spulendrahts (20) in Form einer Spule (20a), wobei der Spulenraum mehrere Nuten (14) umfasst, die von einer Statorwand (12a) und Polhörnern (16) des Stators (10) begrenzt werden,
- den in den Spulenraum eingelegten Spulendraht (20), **dadurch gekennzeichnet, dass** der Spulendraht (20) im Bereich zwischen zwei Polhörnern (16) über die Nut (14) hinaus gewickelt ist.

## Claims

1. Method of manufacturing a stator (10) comprising the steps of:
- providing a stator body with at least two stator segments (12) which are designed as identical parts and each have a coil space formed on a stator segment for receiving a coil wire (20) in the form of a coil (20a), the coil space having a groove (14),
- inserting a winding template (40) into a stator segment (12);
- inserting an insulating paper (30) with a radial projection (32) beyond the pole tips (16) of the respective stator halves (12);
- pulling the radial projection (32) inwardly during the subsequent winding process to ensure during winding that the insulating paper (30) is not kinked by the coil wire (20);
- introducing the coil wire (20) into the coil space, the coil wire (20) being wound beyond the groove (14) in the region between two pole horns (16),
- at least partially connecting the windings of the coil (20a) to one another in a materially coherent manner at least in parts of the area of the coil (20a) located outside the groove (14); and
- remove the winding template (40).

2. Method according to claim 1, **characterized in that** the material connection is made using a baked enamel wire as coil wire (20).

3. Method according to claim 2, **characterized in that** the material connection is made by applying an electric current to the baking enamel wire and thereby heating it.

4. Method according to claim 3, **characterized in that** an electric current with a current intensity in the range of 30-70A, in particular 50A, is used for a period of 3-5 seconds, in particular for 4 seconds.

5. Method according to one of the preceding claims, **characterized in that** a trickle resin is additionally or alternatively used for the material connection of the windings.

6. Method according to claim 5, **characterized in that** the stator body is immersed in the trickle resin.

7. Method according to one of claims 3-6, **characterised in that** firstly a provisional fixing of the windings is carried out by applying current and subsequently a trickle resin is used for the final fixing.

8. Method according to one of claims 1 to 7, **characterized in that** 40-60% of the coil wire (20) is arranged outside the groove (14).

9. Stator (10) of an electric drive manufactured by the method according to any one of claims 1 to 8, wherein the stator (10) comprises:
- a stator body with a coil space for receiving a coil wire (20) in the form of a coil (20a), the coil space comprising a plurality of grooves (14) which are bounded by a stator wall (12a) and pole horns (16) of the stator (10),
- the coil wire (20) inserted in the coil chamber,
**characterised in that** the coil wire (20) is wound beyond the groove (14) in the region between two pole horns (16).

## Revendications

1. Procédé de fabrication d'un stator (10) comprenant les étapes suivantes
- fournir un corps de stator avec au moins deux segments de stator (12) qui sont conçus comme des pièces identiques et qui ont chacun un espace de bobine formé sur un segment de stator pour recevoir un fil de bobine (20) sous la forme d'une bobine (20a), l'espace de bobine ayant une rainure (14),
- insertion d'un gabarit de bobinage (40) dans un segment de stator (12) ;
- l'insertion d'un papier isolant (30) avec une projection radiale (32) au-delà des extrémités des pôles (16) des moitiés de stator respectives (12) ;
- en tirant la saillie radiale (32) vers l'intérieur lors du processus d'enroulement ultérieur pour s'assurer que, pendant l'enroulement, le papier isolant (30) n'est pas plié par le fil de la bobine (20) ;
- l'introduction du fil de bobinage (20) dans l'espace de bobinage, le fil de bobinage (20) étant enroulé au-delà de la rainure (14) dans la région située entre deux cornes polaires (16),
- relier au moins partiellement les enroulements de la bobine (20a) les uns aux autres d'une manière matériellement cohérente au moins dans les parties de la zone de la bobine (20a) situées à l'extérieur de la rainure (14) ; et
- retirez le gabarit de bobinage (40).

2. Procédé selon la revendication 1, **caractérisé en ce que** la connexion matérielle est réalisée en utilisant un fil émaillé cuit comme fil de bobine (20).

3. Procédé selon la revendication 2, **caractérisé en ce que** la connexion matérielle est réalisée en appliquant un courant électrique au fil d'émail de cuisson et en le chauffant ainsi.

4. Procédé selon la revendication 3, **caractérisé en ce qu'**un courant électrique ayant une intensité de courant dans la plage de 30-70A, en particulier 50A, est utilisé pendant une période de 3-5 secondes, en particulier pendant 4 secondes.

5. Procédé selon l'une des revendications précédentes, **caractérisée en ce qu'**une résine de ruissellement est utilisée en plus ou en alternative pour le raccordement matériel des enroulements.

6. Procédé selon la revendication 5, **caractérisée en ce que** le corps du stator est immergé dans la résine de ruissellement.

7. Procédé selon l'une des revendications 3-6, **caractérisée en ce qu'**on procède d'abord à une fixation provisoire des enroulements par application de courant et ensuite on utilise une résine de ruissellement pour la fixation définitive.

8. Procédé selon l'une des revendications 1 à 7, **caractérisé en ce que** 40 à 60 % du fil de bobinage (20) est disposé à l'extérieur de la rainure (14).

9. Stator (10) d'un entraînement électrique fabriqué par le procédé selon l'une quelconque des revendications 1 à 8, dans lequel le stator (10) comprend :
- un corps de stator avec un espace de bobine pour recevoir un fil de bobine (20) sous la forme d'une bobine (20a), l'espace de bobine comprenant une pluralité de rainures (14) qui sont délimitées par une paroi de stator (12a) et des cornes de pôle (16) du stator (10),
- le fil de bobinage (20) inséré dans la chambre de bobinage,
**caractérisé en ce que** le fil de bobinage (20) est enroulé au-delà de la rainure (14) dans la région située entre deux cornes polaires (16).
